(19) Europäisches Patentamt
European Patent Office
Office européen des brevets

(11) **EP 4 074 526 B1**

(12) **EUROPEAN PATENT SPECIFICATION**

(45) Date of publication and mention
of the grant of the patent:
**01.05.2024 Bulletin 2024/18**

(21) Application number: **22000057.4**

(22) Date of filing: **15.03.2022**

(51) International Patent Classification (IPC):
**B60G 11/02** (2006.01)     **B60G 17/018** (2006.01)
**G01M 17/04** (2006.01)

(52) Cooperative Patent Classification (CPC):
**B60G 11/02; B60G 17/0182; G01M 17/04;**
B60G 2202/11; B60G 2400/10; B60G 2400/60;
B60G 2401/12; B60G 2401/122; B60G 2800/70

(54) **PROCESS FOR CHECKING THE STATE OF WEAR OF A SUSPENSION**

VERFAHREN ZUR ÜBERPRÜFUNG DES VERSCHLEISSZUSTANDES EINER AUFHÄNGUNG

PROCÉDÉ DE VÉRIFICATION DE L'ÉTAT D'USURE D'UNE SUSPENSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2021 IT 202100006299**

(43) Date of publication of application:
**19.10.2022 Bulletin 2022/42**

(73) Proprietor: **MB ReD S.r.l.**
**10078 Venaria Reale (TO) (IT)**

(72) Inventor: **Papaspyrou, Spyridion**
**I-10078 VENARIA REALE (TO) (IT)**

(74) Representative: **Garavelli, Paolo**
**A.BRE.MAR. S.R.L.**
**Consulenza in Proprietà Industriale**
**Via Servais 27**
**10146 Torino (IT)**

(56) References cited:
**EP-A1- 0 342 275     WO-A1-2016/102968**

- **BAKIR MEHMET ET AL: "Correlation of
Simulation, Test Bench and Rough Road Testing
in terms of Strength and Fatigue Life of a Leaf
Spring", PROCEDIA ENGINEERING, ELSEVIER
BV, NL, vol. 213, 6 March 2018 (2018-03-06), pages
303-312, XP085357330, ISSN: 1877-7058, DOI:
10.1016/J.PROENG.2018.02.031**

**Description**

The present invention relates to a process for checking the state of wear of a suspension, in particular a leaf spring suspension for vehicles.

More specifically, the invention refers to semi-elliptical and parabolic leaf springs and leaf spring brackets for industrial vehicles.

Known suspensions separate the suspended masses (bodywork, interiors, engine) of the vehicle from the unsuspended ones (the tires) and comprise two elements, one elastic, the spring, for example of the leaf spring type, which connects the frame to the wheels and has the task of transforming the stresses coming from the ground into kinetic energy by loading the spring, and a damping, the shock absorber which absorbs the kinetic energy loaded in the elastic components, limiting their oscillation time.

The suspension guarantees vehicle stability and comfort and safety for those in the passenger compartment.

Leaf springs are important components of the suspension system of commercial vehicles, such as trucks, and are subjected to multi-axial loads of varying amplitude.

During the movement of the vehicle, not only vertical loads act on the spring but also longitudinal and lateral forces. In addition, during starting, braking and cornering, the forces involved present various moments, including torsion, which affect the life of the leaf spring. The shock absorber, which completes the suspension, dampens the elastic force of the suspension movement, exploiting the frictional force between piston and oil.

The leaf spring - shock absorber system has the problem of requiring a periodic check which allows, in case of malfunction, a prompt replacement to avoid an increase in consumption and a decrease in safety and comfort. This control, however, is difficult to carry out except in the presence of breakages or evident signs of failure and in any case requires a very complex disassembly and diagnostic activity, to be performed not in real conditions as in the absence of the structure and constraints of the vehicle.

Object of the present invention is carrying a realistic measurement of the suspension during its operation, obtaining experimental fatigue curves for various types of leaf springs and detecting, through a plurality of sensors connected to the suspension, some particular characteristics of the suspension, to study their correspondence with fatigue curves.

Another problem of known systems is due to the negative effects caused on the elastic system (leaf spring) by the worn damping system. This influence further complicates the assessment of the residual life of the suspension by introducing an additional parameter to be kept under control.

Studying the fatigue behavior of the suspension over time is particularly difficult, as it is necessary to simulate a highly complex situation that occurs during the life of the vehicle. Among the variables involved are the multi-axial loads that insist on the suspension as a result of the load, the characteristics of the road, the responses of the other subsystems such as braking system, tires etc. The system would be hyper-complex and must be approached using some approximations inserted, however, in a strong theoretical context.

The canonical way to perform a fatigue test is to subject, with the aid of an *ad hoc* machinery, the product to be tested to a specific load applied according to a sinusoidal law at a certain frequency for a certain number of cycles. This mode provides a suspension evaluation parameter which is however very far from the real situation in which the load is never constant and the stress of the road is anything but sinusoidal, in addition to numerous other factors that are not considered.

The most relevant prior art document for the present invention is BAKIR MEHMET ET AL, "Correlation of Simulation, Test Bench and Rough Road Testing in terms of Strength and Fatigue Life of a Leaf Spring", PROCEDIA ENGINEERING, ELSEVIER BV, NL, vol. 213, 6 March 2018 pages 303-312, XP085357330, ISSN 1877-7058, DOI:10.1016/J.PROENG.2018.02.031.

IT-A-202100006299 forms part of the state of art within the meaning of Article 54(2) EPC.

The object of the present invention is therefore obtaining an estimate of the residual life of the suspension, based on data provided by the suspension itself, during its life on the vehicle.

In summary, the objects of the invention are creating a process for checking the state of wear of a suspension that allow obtaining:

- lower use of raw materials and lower production costs;
- better enhancement of the mechanical and physical characteristics of the components;
- reduction of system assembly times;
- reduction of system components;
- greater production speed and placing on the market of products.

The above and other objects and advantages of the invention, as will emerge from the following description, are achieved with a process for checking the state of wear of a suspension as claimed in claim 1.

It is understood that all attached claims form an integral part of the present description.

It will be immediately obvious that innumerable variations and modifications (for example relating to shape, dimensions, arrangements and parts with equivalent functionality) can be made to what is described, without departing from the scope of the invention as appears from the attached claims.

The present invention will be better described by a preferred embodiment thereof, provided by way of non-limiting example, with reference to the attached drawings, in which:

- Figure 1 shows an example of a Wöhler curve built for a suspension of a system; and
- Figure 2 shows the construction process of the curve of Figure 1 through tests and experiments.

In studying the fatigue life of a component, the accumulated damage of the material due to the cyclic load is proportional to the ratio between the number of cycles that the component has undergone and the number of cycles that causes failure at the stress level considered.

The overall damage accumulated by the material due to the succession of cyclic loads is given by the sum of the damages relative to each load level.

Therefore, if n1 is the number of cycles that the component has undergone and N1 the number of cycles that causes the breakage, then the damage can be represented as

$$D = \frac{n_1}{N_1} + \frac{n_2}{N_2} + \cdots$$

with the breakage occurring when

$$D = \sum \frac{n_i}{N_i} \geq 1$$

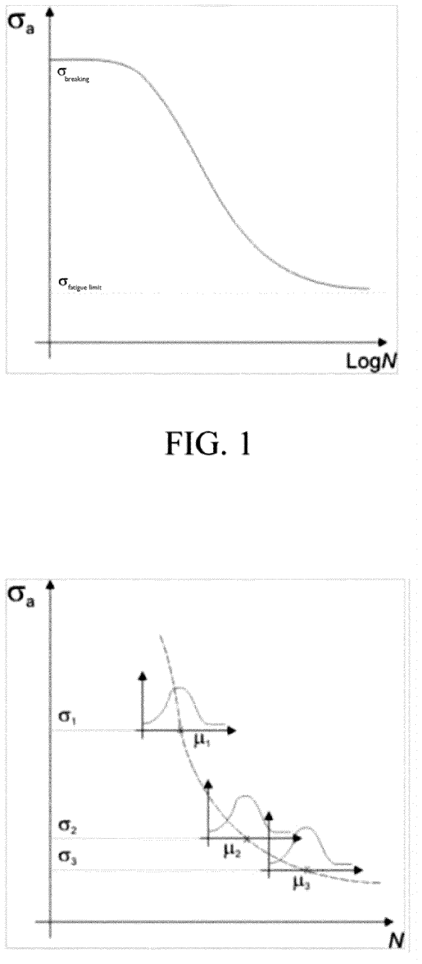

The study, therefore, requires that for each type of suspension a Wöhler curve (figure 1) is constructed through tests and experiments to be carried out on physical samples, each time reporting the correction on the simulations and repeating the process.

Figure 2 indicates the construction process of this curve through tests and experiments to be carried out on physical samples, reporting the correction on the simulations each time and repeating the process.

The process for verifying the state of wear of a suspension of the invention provides for the study of the fatigue life of the suspension by means of a simulation with increasingly complex stress input, followed by a laboratory check on samples made according to the indications of the simulation.

The process of the invention includes the following steps:

- a structural analysis step (FEM) of the suspension, preferably consisting of a leaf spring, with load data at a standard frequency;
- a step of making a first sample of the suspension using data obtained in the previous step of structural analysis; preferably, the first sample is based on nominal conditions in terms of geometry and material properties;
- a test step of said first sample at the standard frequency in a testing machine, in which accelerations and loads on different points of the suspension are measured;
- a step of realization of a compound signal that simulates the road sign, in which the processing, normalization and filtering of said signal is carried out;
- a simulation step of the fatigue behavior of the suspension using as input the signal created in the previous step to create a mathematical model of the suspension;
- a step of realization of the fatigue curves for different families of suspensions, preferably leaf springs;
- a step of realization of a second sample of the suspension with the feedback data of the simulation step; said second sample of the suspension is made on the basis of the test on the first sample, using the data obtained from the mathematical model of the optimized suspension (tuned) taking into account the variation of the characteristics of the first sample that occur during the production step; in other words, the estimate based on the simulation will be taken into account for the estimate of the residual life of the second sample. In detail, differently from the first sample, the second sample will be a faulty damaged system, with a known level of damage, and will be used to update the mathematical model of each suspension system in real time;
- a step of verification of the deviation of the fatigue values obtained in the simulation step from those measured for the second sample with a test in the laboratory under constant frequency;
- a validation step of the final fatigue curve; the validation of the fatigue curve will consist in causing the second sample to fail through fatigue loads. Essentially, the experimental results will be compared with those coming from the first test and from the numerical model; the validation is carried out by comparing the fatigue curves obtained in the laboratory with the theoretical ones of the material and those obtained from the simulation performed. This step, coupled with the developed mathematical models, will help create a unique fatigue curve for each suspension system family.

Then, the collected data will be used to improve the estimate of the residual life, i.e. to update the mathematical model of the suspension system during the life of the second sample, which can be a suspension system used on a vehicle that is monitored during its life.

Preferably, the data used in the step of simulating the fatigue behavior of the suspension are created in the step of realization of a compound signal that simulates the road sign, preferably through a first software (for example FEMFAT, Magna). Preferably, the first software operates exclusively in the frequency domain, defining the various loads through spectral density functions of stochastic signals. The large amount of data obtained are preferably organized through a second software (for example LMS Tecware, Siemens). This second software uses several statistical processes and determines the level of fatigue damage through frequency calculations. The data to be provided as input are obtained both through field tests, directly on the vehicle, and through laboratory tests or numerical simulations of road routes. During data processing and consolidation, any anomalies (peaks and drifts) are detected and numerical filters are performed to have homogeneous test signals to be used in the simulator. The various elaborations provide an interrelation between the different fatigue life scenarios.

Preferably, in the test step of the first sample, a first reference accelerometer is mounted in one point of the crossbow, and a second mobile accelerometer mounted successively in various other points of the crossbow and, if necessary, in different directions. The quantities and step differences between the mobile accelerometers and the first reference accelerometer are then measured in all steady-state points of the system that correspond to the possible equilibrium configurations of the system in the different operating regimes and according to a given sampling interval. By plotting these measurements, the deformations of the various parts of the crossbow and the shape of the deflection are obtained, which constitutes the starting point for the generation of forces/frequency from which deflections under the action of other forces and/or frequencies can be calculated. For example, if one finds that a particular part or position has excessive deflection, one can stiffen that part or position. This increases the natural frequency beyond the operating frequency range of the system.

Preferably, estimates of the fatigue life based on controlled loads and cyclic properties of the materials are obtained in the simulation of the suspension fatigue behavior. This helps to deepen many sensitivity studies in terms of material characteristics, specific geometries and surface conditions.

Preferably, in the laboratory test under constant frequency, performed in the step of verification of the deviation of the fatigue values, it is necessary to perform an additional number of tests and use other statistical processes, for example through the tool Design of Experiments, DOE. The goal is to evaluate the differences in testing, in sinusoidal regime, with respect to simulated results. Dynamic testing of crossbows involves detecting their deformation at a critical frequency. This can be done through the use of the operational measures of the deflection shape. In this process, the form of forced dynamic deflection is measured below the steady state (operating) frequency of the system.

The sample considered has defects as production or use will inevitably affect the performance of the suspension system and its "failure" characteristics.

To correlate test results (e.g. stiffness and fatigue properties), engineering parameters (such as elastic modulus) and design process, an uncertainty analysis is performed employing Monte Carlo simulation and random surface analysis together with further material testing to understand the role, for example, of lamination and other manufacturing processes.

A system for checking the state of wear of a suspension comprises the suspension, preferably the leaf spring, the plurality of sensors connected to the suspension, a data collection system comprising storage means and a processing unit that compares the filtered data received from the field with a suspension time behavior data library stored in the storage media.

Preferably, the sensors are connected to the suspensions of the rear wheels or to the suspensions of all wheels of a vehicle and include strain gauges which send measured deformation data to the data collection system to measure both static and dynamic deformations, for example using a Wheatstone bridge measurement circuit.

Preferably, the sensors detect the deformation by taking a reading of the applied load value. This detected value is stored for established time intervals in the storage means or up to a significant predetermined variation.

Advantageously, in the process for verifying the state of wear of a suspension of the invention, input data for the design, simulation, construction of prototypes and testing are provided by the suspension itself and collected during its real life on the vehicle, providing a prediction of the residual life of the suspension itself.

The system for checking the state of wear of a suspension is based on interfacing the sensors with a processing unit that can store data detected by the sensors and possibly make a first classification. This type of processing includes two parallel operations, that is, two different types of algorithms: the classifier and the learner. The first deals with processing the data and producing a specific result on this basis. The second, on the other hand, tests these results in order to attribute a weight matrix to them, which will then be used by the first algorithm to classify new data and situations that the programmers had not considered at the beginning.

The calculation processes used at the model level make use of Big Data technology. In a first mode, the algorithms process hundreds of sampled data detected by the sensors on the basis of a dozen variables (white or gray box); in a second way, the algorithms analyze millions or billions of sampled data detected by the sensors on the basis of hundreds or thousands of variables (black box or sentient), thanks to data analysis techniques (data mining) that operate through a process of automatic learning (machine learning) or sometimes artificial intelligence. Machine learning allows the machine to learn specific tasks directly from data, without the need for explicit, dedicated programming, thanks to its ability to learn and make associations based on starting examples.

Preferably, the suspension sample and the gradually optimized mathematical model will continuously share data using the sensors and through a dedicated cloud server. This server will host all the information of the single hibernation system together with the software and model for estimating the remaining life. The analysis output (residual life and state of health) will be communicated to a user through a dedicated app.

**Claims**

1. Process for checking the state of wear of a suspension comprising the following steps:

   - a step of structural analysis (FEM) of the suspension with load data at a standard frequency;
   - a step of making a first sample of the suspension using data obtained in the previous step of structural analysis;
   - a test step of said first sample at the standard frequency in a testing machine in which accelerations and loads on different points of the suspension are measured;
   - a step of realization of a compound signal that simulates the road sign in which processing, normalization and filtering of said signal are carried out;
   - a step of simulation of the fatigue behavior of the suspension using as input the signal realized in the previous step of realization of a compound signal to create a mathematical model of the suspension;
   - a step of realization of the fatigue curves for different families of suspensions;
   - a step of realization of a second sample of the suspension with feedback data of the simulation step, said second sample of the suspension being made on the basis of the test on the first sample, using data obtained from the mathematical model of the optimized suspension, keeping in consideration the variation of the characteristics of the first sample that occur during the production step, wherein the second sample is a faulty damaged system, with a known level of damage, and is used to update the mathematical model of the suspension in real time;
   - a step of verification of the deviation of the fatigue values obtained in the simulation step from those measured for the second sample with a test in laboratory under constant frequency;
   - a validation step of the final fatigue curve carried out by causing the second sample to fail due to fatigue loads.

2. Process for checking the state of wear of a suspension according to claim 1, **characterized in that**, in the step of realization of a compound signal that simulates the road sign, data used in the step of simulating the fatigue behavior of the suspension are created through a first software that operates exclusively in the frequency domain, defining the various loads through spectral density functions of stochastic signals.

3. Process for checking the state of wear of a suspension according to claim 2, **characterized in that** data obtained are organized through a second software that uses different statistical processes and determines the level of fatigue damage through frequency calculations, and **in that** data to be provided as input are obtained both through field tests and through laboratory tests or numerical simulations of road routes to detect any anomalies during data processing and consolidation and perform numerical filters to obtain homogeneous test signals to be used in the simulator.

4. Process for checking the state of wear of a suspension according to any one of the preceding claims, **characterized in that**, in the test step of the first sample, a first reference accelerometer is mounted in a spot of the leaf spring, and a second mobile accelerometer is mounted successively in several other spots of the crossbow and, if necessary, in different directions, the quantities and step differences between the mobile accelerometers and the first reference accelerometer being then measured at all steady-state points of the system.

5. Process for checking the state of wear of a suspension according to any one of the preceding claims, **characterized in that**, in the step of simulating the fatigue behavior of the suspension, estimates of the fatigue life based on controlled loads and cyclic properties of the materials are obtained.

6. Process for checking the state of wear of a suspension according to any one of the preceding claims, **characterized in that**, in the laboratory test under constant frequency, carried out in the step of checking the deviation of the fatigue values, a further number of tests must be carried out on the sample to verify the characteristics of the material and perform an uncertainty analysis using statistical processes to evaluate the differences of the test, in sinusoidal regime, with respect to the simulated results.

7. Process for checking the state of wear of a suspension according to claim 6, **characterized in that** the dynamic testing of the leaf springs involves the detection of their deformation at a critical frequency through the use of the operational measurements of the deflection form in which the form of forced dynamic deflection is measured below the steady state frequency of the system.

**Patentansprüche**

1. Verfahren zur Überprüfung des Verschleißzustandes einer Aufhängung mit folgenden Phasen:

   - eine Strukturanalysephase (FEM) der Aufhängung mit Belastungsdaten bei einer Standardfrequenz;
   - eine Phase der Erstellung einer ersten Probe der Suspension unter Verwendung der in der vorherigen Strukturanalysephase erhaltenen Daten;
   - eine Testphase der ersten Probe bei der Standardfrequenz in einer Testmaschine, in der Beschleunigungen und Belastungen an verschiedenen Punkten der Aufhängung gemessen werden;
   - eine Phase der Erstellung eines zusammengesetzten Signals, das das Verkehrszeichen simuliert, in dem die Verarbeitung, Normalisierung und Filterung des Signals durchgeführt wird;
   - eine Simulationsphase des Ermüdungsverhaltens der Aufhängung unter Verwendung des in der vorherigen Phase der Erzeugung eines zusammengesetzten Signals erzeugten Signals als Eingabe, um ein mathematisches Modell der Aufhängung zu erstellen;
   - eine Phase der Erstellung von Ermüdungskurven für verschiedene Aufhängungsfamilien;
   - eine Phase der Erstellung eines zweiten Musters der Aufhängung mit den Rückmeldungsdaten der Simulationsphase, wobei das zweite Muster der Aufhängung auf der Grundlage des Tests des ersten Musters unter Verwendung der aus dem mathematischen Modell erhaltenen Daten erstellt wird optimierte Aufhängung unter Berücksichtigung der während der Produktionsphase auftretenden Schwankungen der Eigenschaften der ersten Probe, wobei die zweite Probe ein ausgefallenes beschädigtes System mit bekanntem Schadensgrad ist und zur Aktualisierung des mathematischen Modells der Aufhängung verwendet wird Echtzeit;
   - eine Phase zur Überprüfung der Abweichung der in der Simulationsphase erhaltenen Ermüdungswerte von denen, die für die zweite Probe mit einem Labortest bei konstanter Frequenz gemessen wurden;
   - eine Validierungsphase der endgültigen Ermüdungskurve, die durchgeführt wird, indem sichergestellt wird, dass die zweite Probe aufgrund von Ermüdungsbelastungen versagt.

2. Verfahren zur Überprüfung des Verschleißzustandes einer Radaufhängung nach Anspruch 1, **dadurch gekennzeichnet, dass** in der Phase der Erstellung eines zusammengesetzten Signals, das das Verkehrszeichen simuliert, die in der Phase der Simulation des Ermüdungsverhaltens verwendeten Daten erstellt werden der Aufhängung durch eine erste Software, die ausschließlich im Frequenzbereich arbeitet und die verschiedenen Belastungen durch spektrale Dichtefunktionen stochastischer Signale definiert.

3. Verfahren zur Überprüfung des Verschleißzustandes einer Aufhängung nach Anspruch 2, **dadurch gekennzeichnet, dass** die gewonnenen Daten durch eine zweite Software organisiert werden, die unterschiedliche statistische Methoden verwendet und durch Häufigkeitsberechnungen das Ausmaß der Ermüdungsschäden ermittelt, und daraus Die als Eingabe bereitzustellenden Daten werden sowohl durch Feldtests als auch durch Labortests oder numerische Simulationen von Straßenrouten gewonnen, um etwaige Anomalien während der Verarbeitung und Konsolidierung der Daten zu erkennen und numerische Filter durchzuführen, um homogene Testsignale für die Verwendung im Simulator zu erhalten.

4. Verfahren zur Überprüfung des Verschleißzustands einer Aufhängung nach einem der vorhergehenden Ansprüche, **dadurch gekennzeichnet, dass** in der Testphase des ersten Musters ein erster Referenzbeschleunigungsmesser an einem Punkt der Blattfeder angebracht wird und ein zweiter Mobiler Beschleunigungsmesser, der anschließend an verschiedenen anderen Punkten der Blattfeder und gegebenenfalls in verschiedenen Richtungen montiert wird, wobei die Größen und Phasenunterschiede zwischen den mobilen Beschleunigungsmessern und dem ersten Referenzbeschleunigungsmesser dann an allen permanenten Regimepunkten des Systems gemessen werden.

5. Verfahren zur Überprüfung des Verschleißzustands einer Aufhängung nach einem der vorhergehenden Ansprüche, **dadurch gekennzeichnet, dass** in der Simulationsphase des Ermüdungsverhaltens der Aufhängung Schätzungen der Ermüdungslebensdauer auf der Grundlage kontrollierter Belastungen und zyklischer Eigenschaften erhalten werden einige Materialien.

6. Verfahren zur Überprüfung des Verschleißzustands einer Aufhängung nach einem der vorhergehenden Ansprüche, **dadurch gekennzeichnet, dass** es sich um einen Labortest mit konstanter Frequenz handelt, der in der Phase der Überprüfung der Abweichung der Ermüdungswerte durchgeführt wird Es ist erforderlich, eine weitere Anzahl von Tests an der Probe durchzuführen, um die Eigenschaften des Materials zu überprüfen und eine Unsicherheitsanalyse mithilfe statistischer Verfahren durchzuführen, um die Unterschiede des Tests im Sinusmodus im Vergleich zu den simulierten Ergebnissen zu bewerten.

7. Verfahren zur Überprüfung des Verschleißzustands einer Aufhängung nach Anspruch 6, **dadurch gekennzeichnet, dass** die dynamische Prüfung der Blattfedern die Erfassung ihrer Verformung bei einer kritischen Frequenz durch die Verwendung von Betriebsmessungen der Durchbiegungsform umfasst bei dem die erzwungene dynamische Auslenkungsform unterhalb der stationären Frequenz des Systems gemessen wird.

## Revendications

1. Procédé de contrôle de l'état d'usure d'une suspension comprenant les phases suivantes:

   - une phase d'analyse structurelle (FEM) de la suspension avec des données de charge à une fréquence standard;
   - une phase de création d'un premier échantillon de la suspension à partir des données obtenues lors de la phase précédente d'analyse structurale;
   - une phase de test dudit premier échantillon à la fréquence standard dans une machine d'essai dans laquelle des accélérations et des charges sont mesurées sur différents points de la suspension;
   - une phase de création d'un signal composite simulant le panneau routier dans laquelle sont effectués le traitement, la normalisation et le filtrage dudit signal;
   - une phase de simulation du comportement en fatigue de la suspension utilisant en entrée le signal créé lors de la phase précédente de création d'un signal composite pour créer un modèle mathématique de la suspension;
   - une phase de création de courbes de fatigue pour différentes familles de suspensions;
   - une phase de création d'un deuxième échantillon de la suspension avec les données de retour de la phase de simulation, ledit deuxième échantillon de la suspension étant créé à partir de l'essai sur le premier échantillon, en utilisant les données obtenues à partir du modèle mathématique du suspension optimisée, en tenant compte de la variation des caractéristiques du premier échantillon se produisant pendant la phase de production, où le deuxième échantillon est un système endommagé en panne, avec un niveau de dommage connu, et est utilisée pour mettre à jour le modèle mathématique de la suspension dans temps réel;
   - une phase de vérification de l'écart des valeurs de fatigue obtenues en phase de simulation par rapport à celles mesurées pour le deuxième échantillon avec un essai en laboratoire à fréquence constante;
   - une phase de validation de la courbe de fatigue finale réalisée en s'assurant que le deuxième échantillon échoue en raison des efforts de fatigue.

2. Procédé de contrôle de l'état d'usure d'une suspension selon la revendication 1, **caractérisé par le fait que**, dans la phase de création d'un signal composite simulant le panneau routier, on crée les données utilisées dans la phase de simulation du comportement en fatigue, de la suspension grâce à un premier logiciel qui opère exclusivement dans le domaine fréquentiel, définissant les différentes charges à travers des fonctions de densité spectrale de signaux stochastiques.

3. Procédure de vérification de l'état d'usure d'une suspension selon la revendication 2, **caractérisée en ce que** les données obtenues sont organisées à travers un deuxième logiciel qui utilise différentes méthodes statistiques et détermine le niveau d'endommagement par fatigue par des calculs de fréquence, et du fait que les données à fournir en entrée sont obtenues à la fois par des tests sur le terrain et par des tests en laboratoire ou des simulations numériques d'itinéraires routiers pour détecter d'éventuelles anomalies lors du traitement et de la consolidation des données et effectuer des filtres numériques pour avoir des signaux de test homogènes à utiliser dans le simulateur.

4. Procédé de contrôle de l'état d'usure d'une suspension selon l'une quelconque des revendications précédentes, **caractérisé en ce que**, dans la phase de test du premier échantillon, un premier accéléromètre de référence est monté en un point de la lame ressort, et un deuxième accéléromètre mobile monté ultérieurement en divers autres points de la lame ressort et, le cas échéant, dans des directions différentes, les grandeurs et différences de phase entre les accéléromètres mobiles et le premier accéléromètre de référence étant alors mesurées en tous les points de régime permanent du système.

5. Procédé de vérification de l'état d'usure d'une suspension selon l'une quelconque des revendications précédentes, **caractérisé en ce que**, dans la phase de simulation du comportement en fatigue de la suspension, on obtient des estimations de la durée de vie en fatigue basées sur des charges et des propriétés cycliques contrôlées, certains matériaux.

6. Procédé de vérification de l'état d'usure d'une suspension selon l'une quelconque des revendications précédentes, **caractérisé par le fait que**, lors de l'essai en laboratoire à fréquence constante, effectué dans la phase de vérification de l'écart des valeurs de fatigue, on Il est nécessaire d'effectuer un certain nombre d'essais supplémentaires sur l'échantillon pour vérifier les caractéristiques du matériau et d'effectuer une analyse d'incertitude à l'aide de processus statistiques pour évaluer les différences de l'essai, en régime sinusoïdal, par rapport aux résultats simulés.

7. Procédé de contrôle de l'état d'usure d'une suspension selon la revendication 6, **caractérisé par le fait que** le test dynamique des ressorts à lames implique la détection de leur déformation à une fréquence critique grâce à l'utilisation de mesures opérationnelles de forme de flèche en dont la forme de déviation dynamique forcée est mesurée en dessous de la fréquence en régime permanent du système.

FIG. 1

## REFERENCES CITED IN THE DESCRIPTION

**Patent documents cited in the description**

- IT 202100006299 A

**Non-patent literature cited in the description**

- Correlation of Simulation, Test Bench and Rough Road Testing in terms of Strength and Fatigue Life of a Leaf Spring. **BAKIR MEHMET et al.** PROCEDIA ENGINEERING. ELSEVIER BV, 06 March 2018, vol. 213, 303-312